Europäisches Patentamt

**European Patent Office**

**Office européen des brevets**

(19)

(11) Publication number: **0 045 329**

**A1**

(12) **EUROPEAN PATENT APPLICATION**

(21) Application number: **80104617.8**

(22) Date of filing: **06.08.80**

(51) Int. Cl.³: **G 11 B 15/66**
**G 11 B 25/06**

(43) Date of publication of application:
**10.02.82 Bulletin 82/6**

(84) Designated Contracting States:
**AT BE CH FR IT LI LU NL SE**

(71) Applicant: **Efuti Giken Co.,LTD.**
**6-1-12, Rokkakubashi**
**Kanagawa-ku Yokohama-shi Kanagawa-ken(JP)**

(71) Applicant: **Funai Electric Co., Ltd.**
**7-627 Nakagaido**
**Daito-shi Osaka(JP)**

(72) Inventor: **Kawai, Tsutomu**
**Yokosuka Heim Room No. 711, 28 Ogawa-cho**
**Yokosuka-shi, Kanagawa-ken(JP)**

(74) Representative: **Lehn, Werner, Dipl.-Ing. et al,**
**Hoffmann. Eitle & Partner Patentanwälte**
**Arabellastrasse 4**
**D-8000 München 81(DE)**

(54) **A cassette base for a tape recorder.**

(57) A cassette base (7) for a video tape recorder is adapted to receive a cassette (1) having a pair of reels (8, 9) wound with a magnetic tape (10) and a closure lid 2. For easy manufacturing and simple assembly the base (7) is formed integrally with four levelling portions or tabs (5, 6) for locating a cassette (1) in a predetermined plane. Further tabs (4) serve to automatically open the lid (2) when the cassette (1) is pressed down onto the base (7). The tabs (4, 5, 6) are all formed integrally with the main body of the base (7) by a cutting and folding operation.

Fig.1.

Fig. 2.

EP 0 045 329 A1

- 1 -

## A Cassette base for a tape recorder

The invention relates to a cassette base for a tape recorder particularly but not exclusively a video tape recorder, adapted to receive a cassette having a pair of reels wound with a magnetic tape so that the reels locate on feed and take-up drives for driving said reels.

The invention seeks to provide such a cassette base which is easy to manufacture and simple to assemble.

According to the present invention there is provided a cassette base for a tape recorder the base being adapted to receive a cassette having a closure lid and a pair of reels wound with magnetic tape; the base having raising portions adapted to engage the lid of a cassette when a cassette is located on said base to thereby open the lid; and a plurality of levelling elements with cassette supporting surfaces lying in a common plane and being adapted to support a cassette located on the base at a predetermined level, the raising portions and levelling elements being formed integrally with said base.

An embodiment of the invention will now be described by way of example with reference to the accompanying drawings in which:-

Fig. 1  is a perspective view of a cassette base according to the invention, used for a video tape recorder,

Fig. 2  is a bottom plan view of a video cassette mounted on the cassette base, and

Fig. 3 is an explanatory view showing how a cassette is fitted into a mounting case and set on the cassette base.

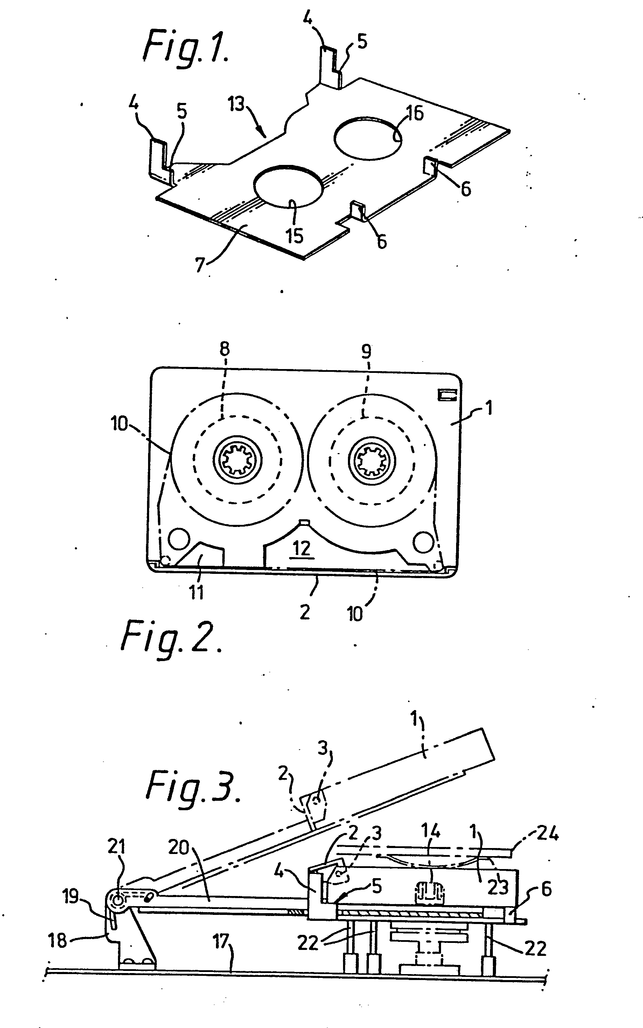

A cassette 1, as shown in Figure 2 of the drawings, carries at its front an opening lid 2 pivotally mounted on the cassette casing through a pin 3. The lid 2 is biased usually to the closed position. The cassette has a pair of reels wound with a magnetic tape and is adapted, in the operative position, to be located on a base so that the reels locate on feed and take up drives or shafts 14 for driving the reels. The base is formed of a metal such as mild steel or aluminium sheet.

As shown in Figure 1, the cassette base has raising portions 4 abutting against the opening lid 2 formed at the front of cassette 1 when the cassette is in the operative position, thereby keeping the lid open. 5,5 and 6,6 are levelling portions against which the bottom surface of cassette 1 abuts to thereby locate the cassette 1 at the correct level. The base is formed of a one piece main body 7 of e.g. a ductile metal sheet of mild steel or aluminium which, at both ends of its front edge has portions cut and bent perpendicularly to the plane of the base to form the raising portions 4,4. The raising portions 4,4 as shown in Fig. 1, each have at the rear thereto a shoulder to form the levelling portions 5,5. Two further tabs are formed on main body 7 at the rear thereof to form further levelling portions 6 the upper edges of which lie in the same plane as the shoulders 5 to define the plane in which the bottom face of the cassette is located, when in the

- 3 -

operative condition. Thus, the raising portions 4 and levelling portions 5 and 6 are all integral with the main body 7 and are formed by a simple cutting and folding operation.

The video cassette 1 is provided at the rear thereof with space 11, 12 within which pinch rollers or drawing-up pins are positioned in a non-loading condition, the pinch rollers or drawing-up pins drawing from the front of cassette 1 to a loading mechanism (not shown) a tape 10 wound on a pair of reels 8, 9 within the cassette 1. Therefore the main body 7 is provided at the front edge thereof with a cutout 13 corresponding to the space 11, 12.

Furthermore, the main body 7 has a pair of bores 15, 16 through which a pair of reel shafts 14 (one reel shaft is not shown) shown in Fig. 3 project to engage the cassette reels.

The body 7, as shown in Fig. 3, is mounted on a chassis 17 through support poles 22. On the other hand, a cassette mounting case 20 is pivotable about an axis 21, against the bias of a spring 19, on a support 18 provided on the chassis 17. The case 20, as shown by the phantom line in Fig. 3, supports the cassette 1 and is connected to the body 7 as shown by the solid line, so that when the case, carrying a cassette, is pressed down-wardly against the bias of spring 19 the cassette 1 fits on the pair of reel shafts 14 projecting through the pair of bores 15, 16, and the bottom surface of the cassette 1 abuts against the levelling portions 5, 6 to thereby set the cassette at the prescribed level. In this position, the cassette 1 is held by a lid member 24 having a leaf spring 23 for resiliently urging the cassette against the levelling portions 5, 6.

The opening lid 2 abuts against the rising portions 4, 4 simultaneously with the downward movement of the cassette, and pivots open through the pin 3, thereby making it possible to draw out the video tape.

As seen from the above, this device has the lid raising portions abutting against the opening lid at the front of cassette so as to open the lid and a plurality of levelling portions abutting against the bottom surface of cassette, the raising portions and levelling portions being integral with the base, thereby making it possible to provide a cassette base which is easy to manufacture and simple to assemble, thus having advantages of reducing the number of parts and the material cost.

Claims:

1. Cassette base for a tape recorder, the base (7) being adapted to receive a cassette (1) having a closure lid (2) and a pair of reels (8, 9) wound with magnetic tape (10), characterized by the base (7) having raising portions (4) adapted to engage the lid (2) of a cassette (1) when a cassette (1) is located on said base (7) to thereby open the lid (2); and a plurality of levelling elements (5, 6) with cassette supporting surfaces lying in a common plane, and being adapted to support a cassette (1) located on the base (7) at a predetermined level, the raising portions (4) and levelling elements (5, 6) being formed integrally with said base (7).

2. Cassette base as claimed in claim 1, characterized in that the base (7) is a planar element and said raising portions (4) and levelling elements (5, 6) comprise tabs formed by a cutting and forming operation in which the tabs are formed by a cutting and forming operation in which the tabs are first formed by cutting and then bent to a position substantially perpendicularly to the plane of the base (7).

3. Cassette base as claimed in claim 1 or 2, characterized in that at least one of said levelling elements (5) is formed by a shoulder on a raising portion (4).

4. Cassette base as claimed in claim 1, 2 or 3, characterized by two orifices (15, 16) through which pass drives (14) adapted to engage and drive the reels (8, 9) of a cassette (1).

5. Cassette base as claimed in any one of claims 1 to 4, chracterized by being formed of a ductile metal sheet.

6. Cassette.as claimed in claim 5, characterized in that
   said metal is mild steel or aluminium.

Fig.1.

Fig.2.

Fig.3.

# EUROPEAN SEARCH REPORT

European Patent Office

## DOCUMENTS CONSIDERED TO·BE RELEVANT

| Category | Citation of document with indication, where appropriate, of relevant passages | Relevant to claim |
|---|---|---|
| | US – A – 3 950 787 (SONY CORP.)<br>* claim 12; column 4, lines 46 to 52 *<br>--<br>DE – A1 – 2 659 559 (PAPST-MOTOREN KG)<br>* claims 1, 3 to 6; fig. 1, 2 *<br>-- | 1<br><br>4-6 |
| A | DE – B2 – 2 437 966 (NORDDEUTSCHE MENDE RUNDFUNK KG)<br>* claim 5; fig. 1 *<br>---- | |

### CLASSIFICATION OF THE APPLICATION (Int. Cl.³)

G 11 B 15/66
G 11 B 25/06

### TECHNICAL FIELDS SEARCHED (Int. Cl.³)

G 11 B 15/00
G 11 B 25/06

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

X | The present search report has been drawn up for all claims

| Place of search | Date of completion of the search | Examiner |
|---|---|---|
| Berlin | 16-03-1981 | LEITHÄUSER |

EPO Form 1503.1 06.78